(19) **Europäisches Patentamt / European Patent Office / Office européen des brevets**

(11) **EP 4 693 565 A1**

(12) # EUROPEAN PATENT APPLICATION
published in accordance with Art. 153(4) EPC

(43) Date of publication:
**11.02.2026 Bulletin 2026/07**

(21) Application number: **24781191.2**

(22) Date of filing: **26.03.2024**

(51) International Patent Classification (IPC):
$H01M\ 10/0567^{(2010.01)}$ $H01M\ 10/052^{(2010.01)}$
$H01M\ 10/0569^{(2010.01)}$ $H01M\ 10/058^{(2010.01)}$
$H01M\ 4/134^{(2010.01)}$ $H01M\ 10/52^{(2006.01)}$
$H01M\ 4/02^{(2006.01)}$

(52) Cooperative Patent Classification (CPC):
H01M 4/02; H01M 4/134; H01M 10/052;
H01M 10/0567; H01M 10/0569; H01M 10/058;
H01M 10/52; Y02E 60/10

(86) International application number:
**PCT/KR2024/003787**

(87) International publication number:
**WO 2024/205200 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 26.03.2023 KR 20230039411
03.07.2023 KR 20230085974

(71) Applicant: **Samsung SDI Co., Ltd.**
**Yongin-si, Gyeonggi-do 17084 (KR)**

(72) Inventors:
- **PARK, Jong Seok**
**Yongin-Si Gyeonggi-do 17084 (KR)**

- **MOON, Jong Seok**
**Yongin-Si Gyeonggi-do 17084 (KR)**
- **LEE, Kang Hee**
**Yongin-Si Gyeonggi-do 17084 (KR)**
- **BAE, Woo Jin**
**Yongin-Si Gyeonggi-do 17084 (KR)**
- **KIM, Hee Min**
**Yongin-Si Gyeonggi-do 17084 (KR)**
- **WOO, Hyun Sik**
**Yongin-Si Gyeonggi-do 17084 (KR)**
- **PARK, Jin Hwan**
**Yongin-Si Gyeonggi-do 17084 (KR)**

(74) Representative: **Michalski Hüttermann & Partner Patentanwälte mbB**
**Kaistraße 16A**
**40221 Düsseldorf (DE)**

(54) **ELECTROLYTE FOR ANODE-FREE LITHIUM METAL BATTERY AND ANODE-FREE LITHIUM METAL BATTERY COMPRISING SAME**

(57) Provided is an electrolyte for an anode-free lithium metal battery, the electrolyte including a lithium salt, a metal salt, and an organic solvent, wherein the metal salt is an ionic bond compound of a metal cation and an anion, and the metal cation has a standard reduction potential that is lower than -1.68 V with respect to a standard hydrogen reduction electrode, is capable of forming an alloy with lithium (Li), and belongs to Period 4 or higher of the Periodic Table of Elements.

**FIG. 1**

## Description

### Technical Field

The present disclosure provides an electrolyte for an anode-free lithium metal battery, and an anode-free lithium metal battery including the same.

### Background Art

Lithium secondary batteries may be high-performance secondary batteries with the highest energy density among currently commercialized secondary batteries and may be used, for example, in various fields such as electric vehicles.

Lithium metal thin films may be used as anodes of lithium secondary batteries. These lithium metal thin films are usually prepared by rolling lithium into a plate shape. However, in lithium secondary batteries including such lithium metal thin films as anodes, as dendrites form and grow on lithium metal thin films, the energy density and long-lifespan characteristics of lithium metal batteries are not satisfactory, and thus there is much room for improvement.

### Disclosure of Invention

### Technical Problem

An aspect is to provide an electrolyte for an anode-free lithium metal battery, which improves energy efficiency.

Another aspect is to provide a method of manufacturing the anode-free lithium metal battery.

### Solution to Problem

According to an aspect,

provided is an electrolyte for an anode-free lithium metal battery including a lithium salt, a metal salt, and an organic solvent,
wherein the metal salt includes a metal cation and an anion, and
the metal cation has a standard reduction potential that is lower than -1.68 V with respect to a standard hydrogen reduction electrode, is capable of forming an alloy with lithium (Li), and belongs to Period 4 or higher of the Periodic Table of Elements.

According to another aspect,

provided is an anode-free lithium metal battery including a cathode current collector,
a cathode containing a cathode active material layer,
an anode current collector, and
the electrolyte.

### Advantageous Effects of Invention

According to an embodiment, an electrolyte capable of suppressing side reactions and reducing the internal resistance of lithium transition metal, and an anode-free lithium metal battery including the same may be manufactured.

### Brief Description of Drawings

FIG. 1 schematically illustrates a structure of an anode-free lithium metal battery according to an embodiment.
FIG. 2 schematically illustrates a structure of an anode-free lithium metal battery after charging, according to an embodiment.
FIG. 3 is a cross-sectional view illustrating an anode and electrolyte stack, according to an embodiment.

### Best Mode for Carrying out the Invention

## Mode for the Invention

Hereinafter, an electrolyte for an anode-free lithium metal battery, and an anode-free lithium metal battery including the same according to an embodiment of the present disclosure will be described in more detail. These embodiments are presented as an example to explain the present disclosure in more detail, and it would be apparent to those skilled in the art that the scope of the present disclosure is not limited by these embodiments.

Unless otherwise defined, all technical and scientific terms used herein have the same meaning as commonly understood by one of ordinary skill in the art to which the present disclosure belongs. In case of conflict, the present specification, including definitions, will take precedence.

Although methods and materials that are similar or equivalent to those described herein, can be used in the practice or testing of the present disclosure, suitable methods and materials are described herein. An expression used in the singular encompasses the expression of the plural, unless it has a clearly different meaning in the context.

As used herein, it is to be understood that the terms such as "including," "having," and "comprising" are intended to indicate the existence of the features, numbers, steps, actions, components, parts, ingredients, materials, or combinations thereof disclosed in the specification and are not intended to preclude the possibility that one or more other features, numbers, steps, actions, components, parts, ingredients, materials, or combinations thereof may exist or may be added.

The term "a combination thereof" refers to a mixture or combination of at least one of the described elements.

The term "and/or" as used herein refers to including any and all combinations of at least one of the items described in relation thereto. The term "or" as used herein refers to "and/or." The expression "at least one" or "one or more" used in front of components in the present specification is meant to supplement a list of all components means, and does not imply to supplement individual components of the description.

In the drawings, the thicknesses of layers and regions are exaggerated or reduced for clarity. Like reference numerals in the drawings denote like elements throughout the specification. Throughout the specification, it will be understood that when a component, such as a layer, a film, a region, or a plate, is referred to as being "on" another component, the component may be directly on the other component or intervening components may be present thereon. Throughout the specification, while such terms as "first," "second," and the like may be used to describe various components, such components should not be limited to the above terms. The above terms are used only to distinguish one component from another.

The electrolyte for an anode-free lithium metal battery includes a lithium salt, a metal salt, and an organic solvent, wherein the metal salt includes a metal cation and an anion, and the metal cation has a standard reduction potential that is lower than -1.68 V with respect to a standard hydrogen reduction electrode, is capable of forming an alloy with lithium (Li), and belongs to Period 4 or higher of the Periodic Table of Elements.

In a lithium metal battery that adopts a lithium metal thin film as an anode, as lithium dendrites are formed and grown on a lithium metal thin film before and after charging or discharging, a dead volume of lithium is formed, and thus lithium loss occurs. As a result, the lifespan and capacity characteristics of a lithium metal battery may be degraded. Since a lithium metal thin film has a plate-like shape, the lithium metal thin film may only expand upward during charging. As a result, since it has been difficult to control the volume expansion of a lithium metal battery after charging or discharging to a desired level, an improvement thereof has been required, and an energy density have been improved by using only an anode current collector without providing a plate-shaped lithium anode thin film.

However, since a lithium metal included in an electrolyte is precipitated on an anode current collector instead of providing a lithium anode thin film, side reactions occur between the lithium metal and the electrolyte, and thus a cycle of the lithium metal and the electrolyte is promoted, resulting in a reduction in lifespan of a lithium metal battery. Therefore, there has been a need for a method of suppressing side reactions between a lithium metal and an electrolyte.

In order to solve above problems, the inventors of the present disclosure have added a metal salt to an electrolyte, and the metal salt has a standard reduction potential that is lower than -1.68 V with respect to a standard hydrogen reduction electrode, is capable of forming an alloy with lithium (Li), and includes a metal cation belonging to Period 4 or higher of the Periodic Table of Elements. In this case, in a process in which a lithium ion included in an electrolyte is precipitated on an anode current collector, a metal cation included in a metal salt and a lithium ion form an alloy to be precipitated, thereby suppressing side reactions between the lithium metal and the electrolyte.

In particular, since the metal cation belongs to Period 4 or higher of the Periodic Table of Elements, the reactivity of an alloy of lithium and the metal cation with the electrolyte may be effectively suppressed, and also excellent electronic conductivity may be maintained, thereby effectively preventing a problem of an increase in internal resistance in an anode-free lithium metal battery.

In addition, since the metal cation has a standard reduction potential that is lower than -1.68 V with respect to a standard hydrogen reduction electrode, side reactions between a metal salt and cathode and anode current collectors may be suppressed during a process of injecting an electrolyte into an anode-free lithium metal battery.

The term "anode-free battery" as used herein refers to a battery i) in which there is no anode active material capable of intercalating or disintercalating lithium, or ii) a battery in which an anode active material layer is not used during battery assembly. Here, a "thickness of an anode" refers to the total thickness of an anode current collector and an anode active material layer.

According to an embodiment, the electrolyte for an anode-free lithium metal battery may include a metal salt and an organic solvent. For example, the metal salt may include a metal cation and an anion. For example, the metal salt may refer to a compound in which the metal cation and the anion are ionically bonded to each other, or a state in which the metal cation and the anion are dissociated in the organic solvent.

According to an embodiment, the metal cation may have a standard reduction potential that is lower than -1.68 V with respect to a standard hydrogen reduction electrode, may form an alloy with lithium (Li), and may belong to Period 4 or higher of the Periodic Table of Elements.

For example, when the metal cation has a standard reduction potential lower than -1.68 eV with respect to a standard hydrogen reduction electrode, as an electrolyte including the metal cation is introduced into an anode-free lithium metal battery, an oxidation-reduction reaction that may occur between the metal cation and a current collector may be suppressed.

For example, when the metal cation is capable of forming an alloy with lithium and belongs to Period 4 or higher of the Periodic Table of Elements, as an electrolyte including the metal cation is introduced into an anode-free lithium metal battery and charging/discharging is performed, when a lithium metal is precipitated, a lithium alloy of a lithium ion and a metal cation is precipitated together with the lithium metal, which may lower the reactivity of the lithium metal. Accordingly, the side reactions between the precipitated lithium metal and the electrolyte may be suppressed, and the lifespan characteristics of an anode-free lithium metal battery may be improved.

In particular, when an electrolyte including the metal salt is introduced into a lithium metal battery including a lithium thin film, an oxidation-reduction reaction may occur between the lithium thin film and a metal included in the metal salt, and thus the metal cation may be ununiformly precipitated on the lithium metal. In this case, as lithium is electrodeposited only at specific positions during charging or discharging, lithium dendrites may be formed, which may reduce the lifespan of a lithium metal battery. Accordingly, by introducing an electrolyte including the metal salt into an anode-free lithium metal battery that does not include a lithium thin film, side reactions between the lithium thin film and the metal salt may be effectively suppressed.

According to an embodiment, the metal cation may include a monovalent cation, a divalent cation, a trivalent cation, a tetravalent cation, or any combination thereof. For example, the metal cation may include a divalent cation.

According to an embodiment, the metal cation may include $Ca^{2+}$, $Sr^{2+}$, $Ba^{2+}$, or any combination thereof.

According to an embodiment, the anion may include an imide-based anion, an amide-based anion, a triazole-based anion, an imidazole-based anion, a phosphate-based anion, a borate-based anion, a nitrate-based anion, or any combination thereof.

According to an embodiment, the anion may include an imide-based anion, an amide-based anion, a triazole-based anion, an imidazole-based anion, a nitrate-based anion, or any combination thereof. According to another embodiment, the anion may include a nitrate-based anion.

According to an embodiment, the anion may include bis(trifluoromethanesulfonyl)amide ($TFSI^-$), bis((perfluoroethyl)sulfonyl)amide ($BETI^-$), fluorosulfonyl-(perfluoroethyl)sulfonylamide ($FPFSI^-$), tetrafluoro-perfluoroethoxyethanesulfonate, bis(fluorosulfonyl)amide ($FSI^-$), trifluoromethanesulfonate ($OTf^-$), fluorosulfonyl-trifluorosulfonylamide ($FTFSI^-$), perfluorobutylsulfonate, methanesulfonate, perfluorohexylsulfonate, tris(pentafluoroethyl)trifluorophosphate ($FAP^-$), cyclo-hexafluoropropane-bis(sulfonyl)imide ($HPSI^-$), sulfate ($SO_4^-$), cyclo-difluoromethane-bis(sulfonyl)imide ($DMSI^-$), bis(fluoromalonato)borate ($BFMB^-$), hexafluorophosphate ($PF_6^-$), tetrafluoroborate ($BF_4^-$), dicyanotriazolate ($DCTA^-$), tetracyanoborate ($Bison^-$), dicyano-trifluoromethyl-imidazole ($TDI^-$), difluoro-di-oxalatophosphate ($DFOP^-$), dicyano-pentafluoroethyl-imidazole ($PDI^-$), difluoro-oxalate-borate ($DFOB^-$), tetra(phosphorodifluoridate)borate, bis(oxalate)borate ($BOB^-$), nitrate ($NO_3^-$), difluorophosphate, tetrafluoro-oxalatophosphate, trifluorotrisperfluoroethylphosphate, or any combination thereof.

According to an embodiment, a concentration of the metal salt in the electrolyte may be in a range of 0.02 M to 10.0 M, for example, 0.02 M to 5.0 M, 0.02 M to 4.0 M, 0.2 M to 10.0 M, 1 M to 5.0 M, 1 M to 4.0 M, 2 M to 10.0 M, 2 M to 5.0 M, or 2 M to 4.0 M. When the concentration of the metal salt is in the above range, lithium alloy formation may be promoted during charging or discharging. Accordingly, as the reactivity of a lithium metal layer to be described below is reduced, side reactions with an electrolyte are suppressed, thereby obtaining further improved lifespan characteristics of an anode-free lithium metal battery.

According to an embodiment, the organic solvent may include at least one selected from an ester-based solvent, a glyme-based solvent, a dioxolane-based solvent, an ether-based solvent, a fluorinated ether-based solvent, a sulfone-based solvent, a ketone-based solvent, a nitrile-based solvent, and a carbonate-based compound.

The glyme-based solvent may include, for example, at least one selected from ethylene glycol dimethyl ether (1,2-dimethoxyethane), ethylene glycol diethyl ether (1,2-diethoxyethane), propylene glycol dimethyl ether, propylene glycol diethyl ether, butylene glycol dimethyl ether, butylene glycol diethyl ether, diethylene glycol dimethyl ether, triethylene glycol dimethyl ether, tetraethylene glycol dimethyl ether, diethylene glycol diethyl ether, triethylene glycol diethyl ether, tetraethylene glycol diethyl ether, dipropylene glycol dimethyl ether, tripropylene glycol dimethyl ether, tetrapropylene glycol dimethyl ether, dipropylene glycol diethyl ether, tripropylene glycol diethyl ether, tetrapropylene glycol diethyl ether, dibutylene glycol dimethyl ether, tributylene glycol dimethyl ether, tetrabutylene glycol dimethyl ether, dibutylene glycol diethyl ether, tributylene glycol diethyl ether, and tetrabutylene glycol diethyl ether.

The ester-based solvent may include, for example, at least one selected from methyl propionate, ethyl propionate, ethyl butyrate, methyl acetate, ethyl acetate, n-propyl acetate, dimethyl acetate, gamma butyrolactone, decanolide, gamma valerolactone, mevalonolactone, and caprolactone.

The ether-based solvent may include, for example, at least one selected from dibutyl ether, tetraglyme, diglyme, dimethoxyethane, 2-methyltetrahydrofuran, and tetrahydrofuran.

The ketone-based solvent may include cyclohexanone, and the nitrile-based solvent may include at least one selected from acetonitrile (AN), succinonitrile (SN), and adiponitrile.

The fluorinated ether-based solvent may include, for example, at least one selected from 1,1,2,2-tetrafluoroethyl 2,2,3,3-tetrafluoropropyl ether, and 2,2,3,3,4,4,5,5-octafluoropentyl 1,1,2,2-tetrafluoroethyl ether.

The dioxolane-based solvent may include, for example, at least one selected from 1,3-dioxolane, 4,5-dimethyl-dioxolane, 4,5-diethyl-dioxolane, 4-methyl-1,3-dioxolane, 4-ethyl-1,3-dioxolane, 2-methyl-1,3-dioxolane, 2-vinyl-1,3-dioxolane, 2,2-dimethyl-1,3-dioxolane, 2-methoxy-1,3-dioxolane, and 2-ethyl-2-methyl-1,3-dioxolane.

The sulfone-based solvent may include, for example, at least one selected from dimethyl sulfone, diethyl sulfone, and ethyl methyl sulfone.

The carbonate-based solvent may include, for example, ethylene carbonate, propylene carbonate, dimethyl carbonate, diethyl carbonate, butylene carbonate, ethyl methyl carbonate, fluoroethylene carbonate, methyl propyl carbonate, ethyl propyl carbonate, methyl isopropyl carbonate, dipropyl carbonate, dibutyl carbonate, or the like.

According to an embodiment, the organic solvent may include at least one selected from a glyme-based solvent, a dioxolane-based solvent, a fluorinated ether-based solvent, a sulfone-based solvent, and a carbonate-based solvent.

According to an embodiment, the organic solvent may include a fluorinated ether-based compound.

According to an embodiment, a content of the fluorinated ether-based compound may be 50 vol% or less, for example, in a range of 0.1 vol% to 50 vol%, or for example, 1 vol% to 30 vol%, with respect to the total content of the organic solvent.

For example, the fluorinated ether-based compound may have excellent flame retardancy due to a high flash point of about 80 °C or more, and when the fluorinated ether-based compound is used as an organic solvent for a liquid electrolyte, an anode-free lithium metal battery with improved high-temperature stability may be manufactured. A fluorine-substituted ether-based solvent has a structure in which fluorine-substituted functional groups are bonded centered on a $-CH_2-O-$ moiety and has low polarity. Therefore, the fluorine-substituted ether-based solvent has excellent miscibility with an ether-based solvent such as dimethyl ether (DME), which is capable of solvating lithium ions and has high dissolution capability.

The fluorine-substituted ether-based solvent may be a compound represented by Formula 1 below.

$$\text{Formula 1} \qquad R-CH_2-O-C_nF_{2n}H$$

In Formula 1, R is $C_{m+1}H_mF_{2m}$ or $C_mF_{2m+1}$, n is an integer from 2 to 5, and m is an integer from 1 to 5.

The fluorine-substituted ether-based solvent represented by Formula 1 is, for example, at least one selected from the group consisting of $HCF_2CF_2CH_2OCF_2CF_2H$, $HCF_2CF_2CH_2OCF_2CF_2CF_2CF_2H$, $HCF_2CF_2OCH_2CF_3$, $HCF_2CF_2OCH_2CH_2OCF_2CF_2H$, $HCF_2CF_2OCH_2CH_2OCF_2CF_2H$, $HCF_2CF_2OCH_2CH_2CH_2OCF_2CF_2H$, $HCF_2CF_2CH_2OCF_2CF_2CF_2H$, $HCF_2CF_2OCH_2CH_2OCF_2CF_2CF_2H$, and $HCF_2CF_2OCH_2CH_2CH_2OCF_2CF_2CF_2H$.

The fluorine-substituted ether-based solvent represented by Formula 1 may be, for example, 1,1,2,2-tetrafluoroethyl 2,2,3,3-tetrafluoropropyl ether, or 2,2,3,3,4,4,5,5-octafluoropentyl 1,1,2,2-tetrafluoroethyl ether.

The electrolyte may include a lithium salt.

For example, as the lithium salt, any lithium salt may be used as long as the lithium salt is generally used for preparing an electrolyte in the art.

According to an embodiment, the lithium salt may include LiSCN, $LiN(CN)_2$, $Li(CF_3SO_2)_3C$, $Li(FSO_2)_2N(LiFSI)$, $LiC_4F_9SO_3$, $LiN(SO_2CF_2CF_3)_2$, $LiPF_3(C_2F_5)_3$, LiCl, LiF, LiBr, Lil, $LiB(C_2O_4)_2$, $LiPF_6$, $LiPF_5(CF_3)$, $LiPF_5(C_2F_5)$, $LiPF_5(C_3F_7)$, $LiPF_4(CF_3)_2$, $LiPF_4(CF_3)(C_2F_5)$, $LiPF_3(CF_3)_3$, $LiPF_3(CF_2CF_3)_3$, $LiPF_4(C_2O_4)_2$, $LiBF_4$, $LiBF_3(C_2F_5)$, lithium tetra-fluoro(oxalate) phosphate), lithium difluoro(bisoxalato) phosphate), lithium bis(oxalato)borate (LiBOB), lithium oxalyldifluoroborate (LIODFB), lithium difluoro(oxalato)borate (LiDFOB), lithium bis(trifluoro methanesulfonyl)imide, LiTFSI, $LiN(SO_2CF_3)_2$, lithium bis(fluorosulfonyl)imide, LiFSI, $LiN(SO_2F)_2$, $LiN(SO_2C_2F_5)_2$, $LiCF_3SO_3$, $LiAsF_6$, $LiSbF_6$, $LiClO_4$, or a mixture thereof.

According to an embodiment, a concentration of the lithium salt in the electrolyte is in a range of 0.1 M to 10.0 M, for example, 0.1 M to 5.0 M, 0.1 M to 4.0 M, 1 M to 10.0 M, 1 M to 5.0 M, 1 M to 4.0 M, 2 M to 10.0 M, 2 M to 5.0 M, or 2 M to 4.0 M. When the concentration of the lithium salt is in the above range, further improved lithium secondary battery characteristics may be obtained.

According to an embodiment, the electrolyte may further include at least one selected from an ionic liquid and a polymer ionic liquid.

For example, as the ionic liquid, any material may be used without limitation as long as the material is an ionic material in a molten state at room temperature (25 °C) and includes a cation and an anion.

The cation of the ionic liquid may include imidazolium, ammonium, pyrrolidinium, or piperidinium, and the anion of the ionic liquid may include bis(fluorosulfonyl)imide, bis(fluorosufonyl)amide, fluoroborate, or fluorophosphate.

The cation of the ionic liquid may include alkylammonium such as triethylammonium, imidazolium such as ethylmethylimidazolium or butylmethylimidazolium, pyrrolidinium such as 1-methyl-1-propylpyrrolidinium, or methylpropylpiperidinium.

The anion of the ionic liquid may include bis(trifluoromethylsulfonyl)imide (TFSI), bis(pentafluoroethylsufonyl) amide (BETI), $BF_4$, or $PF_6$.

For example, the ionic liquid may include [emim]Cl/$AlCl_3$ (emim=ethyl methyl imidazolium), [bmpyr]NTf2 (bppyr=butyl methyl pyridinium), [bpy]Br/$AlCl_3$ (bpy=4, 4'-bipyridine), [choline]Cl/$CrCl_3$-$6H_2O$, [Hpy$(CH_2)_3$pyH][NTf$_2$]$_2$ (NTf=trifluoromethanesulfonimide), [emim]OTf/[hmim]I (hmim=hexyl methyl imidazolium), [choline]Cl/$HOCH_2CH_2OH$, [$Et_2$MeN($CH_2CH_2$OMe)]$BF_4$ (Et=ethyl, Me=methyl, Pr=propyl, Bu=butyl, Ph=phenyl, Oct=octyl, and Hex=hexyl), [$Bu_3PCH_2CH_2C_8F_{17}$]OTf (OTf=trifluoromethane sulfonate), [bmim]$PF_6$ (bmim=butyl methyl imidazolium), [bmim]$BF_4$, [omim]$PF_6$ (omim=octyl methyl imidazolium), [$Oct_3PC_{18}H_{37}$]I, [NC$(CH_2)_3$mim]NTf$_2$ (mim=methyl imidazolium), [$Pr_4$N] [B(CN)$_4$], [bmim]NTf$_2$, [bmim]Cl, [bmim][Me(OCH$_2$CH$_2$)$_2$OSO$_3$], [PhCH$_2$mim]OTf, [Me$_3$NCH(Me)CH(OH)Ph] NTf$_2$, [pmim][(HO)$_2$PO$_2$] (pmim=propyl methyl imidazolium), [b(6-Me)quin]NTf$_2$ (bquin=butyl quinolinium, [bmim][Cu$_2$Cl$_3$], C$_{18}$H$_{37}$OCH$_2$mim]BF$_4$ (mim=methyl imidazolium), [heim]PF$_6$ (heim=hexyl ethyl imidazolium), [mim(CH$_2$CH$_2$O)$_2$CH$_2$CH$_2$mim][NTf$_2$]$_2$ (mim=methyl imidazolium), [obim]PF$_6$ (obim=octyl butyl imidazolium), [oquin] NTf$_2$ (oquin=octyl quinolinium), [hmim][PF$_3$(C$_2$F$_5$)$_3$], [C$_{14}$H$_{29}$mim]Br (mim=methyl imidazolium), [Me$_2$N(C$_{12}$H$_{25}$)$_2$]NO$_3$, [emim]BF$_4$, [mm(3-NO$_2$)im][dinitrotriazolate], [MeN(CH$_2$CH$_2$OH)$_3$], [MeOSO$_3$], [Hex$_3$PC$_{14}$H$_{29}$]NTf$_2$, [emim][EtOSO$_3$], [choline][ibuprofenate], [emim]NTf$_2$, [emim][(EtO)$_2$PO$_2$], [emim]Cl/CrCl$_2$, [Hex$_3$PC$_{14}$H$_{29}$]N(CN)$_2$, or any combination thereof.

The polymer ionic liquid may include an ionic compound in the form of a polymer consisting of an organic cation including an imidazolium group and an organic or inorganic anion.

For example, the organic cation of the polymer ionic liquid may include poly(1-vinyl-3-alkylimidazolium), poly(1-allyl-3-alkylimidazolium), or poly(1-(meth)acryloyloxy-3-alkylimidazolium). The organic anion of the polymer ionic liquid may include $CH_3COO^-$, $CF_3COO^-$, $CH_3SO_3^-$, $CF_3SO_3^-$, $(CF_3SO_2)_2N^-$, $(CF_3SO_2)_3C^-$, $(CF_3CF_2SO_2)_2N^-$, $C_4F_9SO_3^-$, $C_3F_7COO^-$, or $(CF_3SO_2)(CF_3CO)N^-$.

For example, the polymer ionic liquid may include poly(1-vinyl-3-alkylimidazolium), poly(1-allyl-3-alkylimidazolium), poly(1-(meth)acryloyloxy-3-alkylimidazolium), or any combination thereof.

According to an embodiment, the electrolyte may have a viscosity of 5 cP or less at a temperature of 25 °C. For example, when the electrolyte satisfies such a viscosity range, the movement of ions in the electrolyte may be free, and ionic conductivity may be excellent. For example, the electrolyte may have an ionic conductivity of 1.0 mS/cm to 5.0 mS/cm at a temperature of 25 °C.

According to another embodiment, in addition to the above-described organic solvent, the electrolyte may further include at least one selected from gamma-butyrolactone, SN, adiponitrile, benzonitrile, AN, tetrahydrofuran, 2-methyltetrahydrofuran, $\gamma$-butyrolactone, 4-methyldioxolane, N,N-dimethylformamide, N,N-dimethylacetamide, dimethyl sulfoxide, dioxane, sulfolane, dichloroethane, chlorobenzene, and nitrobenzene.

According to an embodiment, the electrolyte may have a liquid, gel, or semi-solid form. Since the electrolyte has a liquid, gel, or semi-solid form, as compared to a case in which the electrolyte is in a full-solid form, at least one selected from a lithium metal and a lithium alloy may freely expand during charging or discharging so that such disadvantages of a conventional lithium metal battery may be solved.

[Anode-free lithium metal battery 100]

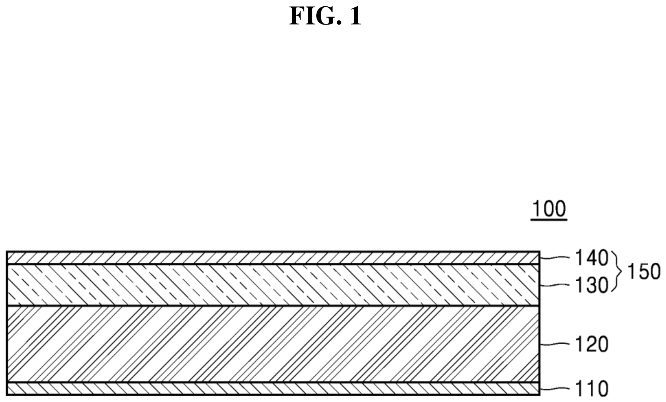

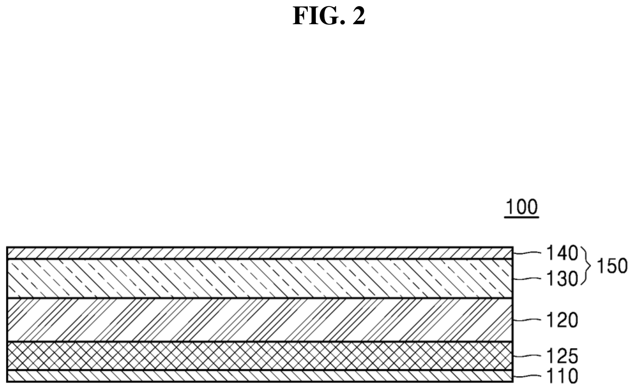

Referring to FIGS. 1 and 2, an anode-free lithium metal battery according to an embodiment will be described in detail. FIG. 2 illustrates a state in which a metal layer is precipitated as the anode-free lithium metal battery of FIG. 1 is charged.

According to an embodiment of the present disclosure, as shown in FIG. 1, the anode-free lithium metal battery includes an anode current collector 110 that does not include a plate-shaped lithium metal thin film, an electrolyte 120 disposed on the anode current collector 110, and a cathode 150 disposed on the electrolyte 120.

According to an embodiment, as shown in FIG. 2, an anode-free lithium metal battery 100 may further include a metal layer 125 disposed between the anode current collector 110 and the electrolyte 120. For example, the metal layer 125 may include a lithium alloy generated through a reaction between a lithium ion included in an electrolyte and a metal cation included in a metal salt during a process of charging the anode-free lithium metal battery 100. For example, the metal layer 125 may be dissociated into a lithium ion and a metal cation during a discharging process so that a thickness of the metal layer 125 may be reduced. For example, when the anode-free lithium metal battery 100 is fully discharged, the anode-free lithium metal battery 100 may not include the metal layer 125.

[Anode current collector 110]

According to an embodiment, the anode current collector 110 may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

According to an embodiment, the anode current collector 110 may include copper (Cu).

According to an embodiment, a plate-shaped lithium metal thin film may be absent on the anode current collector 110 before charging/discharging is performed. For example, when a plate-shaped lithium metal thin film is disposed on the anode current collector 110 before charging/discharging is performed, during a process of arranging an electrolyte on the anode current collector 110, a metal cation included in the electrolyte may react with the lithium metal thin film and thus may be precipitated as a metal. In this case, the precipitated metal is non-uniformly precipitated on the lithium metal thin film, and thus the lithium metal thin film may have an uneven surface state. Accordingly, as lithium is electrodeposited only at specific positions during charging or discharging of a lithium metal battery, lithium dendrites may be formed on a surface of the lithium metal thin film, which may degrade the lifespan characteristics of the lithium metal battery. Accordingly, in the case of an anode-free lithium metal battery in which a plate-shaped lithium metal thin film is absent on the anode current collector 110 before charging or discharging is performed, dendrite formation may be prevented, thereby further improving lifespan characteristics.

For example, the anode current collector may be a mesh-type current collector. When a mesh-type current collector is used as an anode current collector, an electrolyte may be effectively supported on the anode current collector. Therefore, nonwoven fabric may not be used in the electrolyte described above.

[Electrolyte 120]

For example, the electrolyte 120 may include a lithium salt as described above, a metal salt, and an organic solvent.

According to another embodiment, the electrolyte 120 may further include nonwoven fabric. The nonwoven fabric may serve to support at least one selected from a lithium metal and a lithium alloy that are precipitated during a charging process. For example, the nonwoven fabric may be omitted. For example, when an anode current collector is a mesh type, nonwoven fabric may not be used.

The nonwoven fabric may have a porosity of 10 vol% to 90 vol%, for example, 10 % to 80 %, for example, 10 vol% to 50 vol%, or for example, 25 vol% to 50 vol%, and an average pore size of 0.1 $\mu$m to 10 $\mu$m, for example, 0.01 $\mu$m to 8 $\mu$m, or for example, 0.1 $\mu$m to 1.0 $\mu$m. An average pore size represents a diameter when a pore shape is spherical and represents a major axis length when a pore shape is non-spherical.

In an embodiment, the nonwoven fabric may include at least one nonwoven fabric selected from cellulose, polyester (for example, polyethylene terephthalate (PET), polyetherimide, polyethylene, polypropylene, polybutylene terephthalate, polyamide, polyacetal, polycarbonate, polyimide, polyetherketone, polyethersulfone, polyphenylene oxide, polyphenylene sulfide, polyethylene naphthalene, polytetrafluoroethylene, polyvinylidene fluoride, polyvinyl chloride, polyacrylonitrile, nylon, and polyparaphenylene benzobisoxazole.

[Metal layer]

Referring to FIG. 2, the anode-free lithium metal battery 100 may further include the metal layer 125 disposed between the anode current collector 110 and the electrolyte 120. For example, the metal layer 125 may include a lithium alloy. For example, the lithium alloy may have lower reactivity with the electrolyte 120 than a lithium metal so that side reactions between the metal layer 125 and the electrolyte 120 may be suppressed. In addition, since the lithium alloy has excellent electrical conductivity, the internal resistance of the anode-free lithium metal battery 100 including the same may be reduced. Accordingly, the anode-free lithium metal battery 100 including the metal layer 125 may have improved lifespan characteristics as well as improved charge/discharge efficiency.

According to an embodiment, the lithium alloy may be a reaction product of a lithium ion and a metal cation which are included in the electrolyte. For example, the metal layer 125 may be absent during a process of manufacturing the anode-free lithium metal battery 100, but as the anode-free lithium metal battery 100 is charged, the lithium ion included in the electrolyte 120 and the metal cation described above may react with each other to be electrodeposited on the anode current collector 110, thereby forming the metal layer 125.

According to an embodiment, the metal layer 125 may further include a lithium metal in addition to the lithium alloy. For example, the lithium metal may be absent during a process of manufacturing the anode-free lithium metal battery 100, but as the anode-free lithium metal battery 100 is charged, the lithium ion included in the electrolyte 120 may be electrodeposited on the anode current collector 110 so that the lithium metal may be formed. In this case, the metal layer 125 may include the lithium alloy and the lithium metal. For example, the lithium alloy included in the metal layer 125 may weaken the reactivity of the lithium metal, thereby effectively preventing side reactions between the metal layer 125 and the electrolyte 120. In addition, since the metal layer 125 has excellent electrical conductivity, the internal resistance of the anode-free lithium metal battery 100 may be reduced as compared to when the anode-free lithium metal battery 100 includes a coating layer. Accordingly, the anode-free lithium metal battery 100 including the metal layer 125 may have improved lifespan characteristics as well as improved charge/discharge efficiency.

The lithium alloy may include an alloy with a metal that has a standard reduction potential lower than -1.68 V with respect to lithium (Li) and a standard hydrogen reduction electrode and belongs to Period 4 or higher of the Periodic Table of Elements. The lithium alloy may include an alloy of lithium, and Ca, Sr, or Ba. For example, the lithium alloy may include a lithium-calcium alloy, a lithium-strontium alloy, a lithium-barium alloy, or a combination thereof.

According to an embodiment, the metal layer may further include a lithium metal.

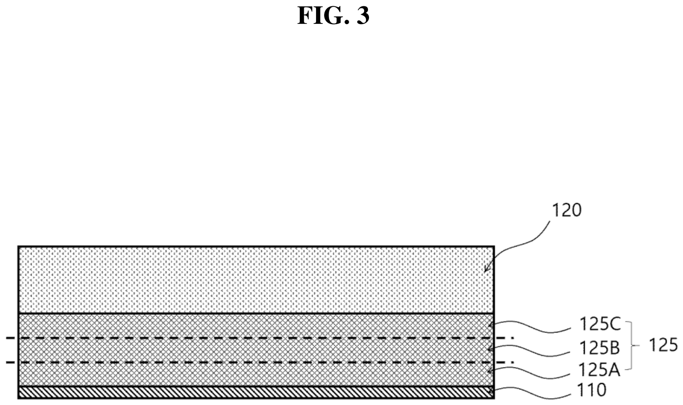

FIG. 3 is a cross-sectional view illustrating an anode and electrolyte stack, according to an embodiment. Referring to FIG. 3, when the metal layer 125 is divided into three equal parts in a thickness direction to sequentially define a first region 125A, a second region 125B, and a third region 125C from a region that is near to the anode current collector to a region that is far from the anode current collector, a weight ratio of a metal element derived from the metal cation to a carbon element in the first region may be in a range of 0.75 to 5. For example, the weight ratio of the metal element derived from the metal cation to the carbon element in the first region may be in a range of 0.75 to 3, 0.75 to 2.9, 0.75 to 2.8, or 0.75 to 2.5.

[Cathode]

As shown in FIG. 1, a cathode active material layer 130 is disposed on a cathode current collector 140 to form the cathode 150. More specifically, the cathode active material layer 130 may be disposed on the electrolyte 120, and the cathode current collector 140 may be disposed on the cathode active material layer 130.

[Cathode: Cathode current collector]

Referring to FIGS. 1 and 2, the cathode 150 includes the cathode current collector 140. For example, the cathode 150 may be prepared by forming the cathode active material layer 130 on the cathode current collector 140.

For example, the cathode current collector 140 may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

According to an embodiment, the cathode current collector 140 may include aluminum (Al). For example, when the cathode current collector 140 includes aluminum (Al), even when the above-described metal salt is introduced into the electrolyte, the metal cation included in the metal salt may have a standard reduction potential lower than -1.68 V with respect to a standard hydrogen reduction electrode so that an oxidation-reduction reaction between the metal cation and the cathode current collector may be prevented. Accordingly, side reactions due to the introduction of the metal salt into the electrolyte may be effectively suppressed, and only the reactivity of the metal layer 125 to be described below, which is precipitated during charging or discharging, may be reduced, thereby further improving the lifespan characteristics of the anode-free lithium metal battery.

[Cathode: Cathode active material layer]

The cathode active material layer 130 may include a cathode active material, a conductive material, and a binder.

For example, at least one composite oxide of lithium and a metal selected from cobalt, manganese, nickel, and a combination thereof may be used. A specific example of the cathode active material may include a compound represented by any one of formulas of $Li_aA_{1-b}B^1_bD^1_2$, wherein $0.90 \leq a \leq 1.8$ and $0 \leq b \leq 0.5$; $Li_aE_{1-b}B^1_bO_{2-c}D^1_c$, wherein $0.90 \leq a \leq 1.8$, $0 \leq b \leq 0.5$, $0 \leq c \leq 0.05$; $LiE_{2-b}B^1_bO_{4-c}D^1_c$, $0 \leq b \leq 0.5$, $0 \leq c \leq 0.05$); $Li_aNi_{1-b-c}Co_bB^1_cD^1_\alpha$, wherein $0.90 \leq a \leq 1.8$, $0 \leq b \leq 0.5$, $0 \leq c \leq 0.05$, and $0 < \alpha \leq 2$; $Li_aNi_{1-b-c}Co_bB^1_cO_{2-\alpha}F^1_\alpha$, wherein $0.90 \leq a \leq 1.8$, $0 \leq b \leq 0.5$, $0 \leq c \leq 0.05$, and $0 < \alpha < 2$; $Li_aNi_{1-b-c}Co_bB'_cO_{2-\alpha}F'_2$, wherein $0.90 \leq a \leq 1.8$, $0 \leq b \leq 0.5$, $0 \leq c \leq 0.05$, and $0 < \alpha < 2$; $Li_aNi_{1-b-c}Mn_bB^1_cD_\alpha$, wherein $0.90 \leq a \leq 1.8$, $0 \leq b \leq 0.5$, $0 \leq c \leq 0.05$, and $0 < \alpha \leq 2$; $Li_aNi_{1-b-c}Mn_bB^1_cO_{2-\alpha}F^1_\alpha$, wherein $0.90 \leq a \leq 1.8$, $0 \leq b \leq 0.5$, $0 \leq c \leq 0.05$, and $0 < \alpha < 2$; $Li_aNi_{1-b-c}Mn_bB^1_cO_{2-\alpha}F^1_2$, wherein $0.90 \leq a \leq 1.8$, $0 \leq b \leq 0.5$, $0 \leq c \leq 0.05$, and $0 < \alpha < 2$; $Li_aNi_bE_cG_dO_2$, wherein $0.90 \leq a \leq 1.8$, $0 \leq b \leq 0.9$, $0 \leq c \leq 0.5$, and $0.001 \leq d \leq 0.1$; $Li_aNi_bCo_cMn_dGeO_2$, wherein $0.90 \leq a \leq 1.8$, $0 \leq b \leq 0.9$, $0 \leq c \leq 0.5$, $0 \leq d \leq 0.5$, and $0.001 \leq e \leq 0.1$; $Li_aNiG_bO_2$,

wherein $0.90 \leq a \leq 1.8$ and $0.001 \leq b \leq 0.1$; $Li_aCoG_bO_2$, wherein $0.90 \leq a \leq 1.8$ and $0.001 \leq b \leq 0.1$; $Li_aMnG_bO_2$, wherein $0.90 \leq a \leq 1.8$ and $0.001 \leq b \leq 0.1$; $Li_aMn_2G_bO_4$, wherein $0.90 \leq a \leq 1.8$ and $0.001 \leq b \leq 0.1$; $QO_2$; $QS_2$; $LiQS_2$; $V_2O_5$; $LiV_2O_5$; $LiIO_2$; $LiNiVO_4$; $Li_{(3-f)}J_2(PO_4)_3$ $(0 \leq f \leq 2)$; $Li_{(3-f)}Fe_2(PO_4)_3$ $(0 \leq f \leq 2)$; and $LiFePO_4$.

In the formulas, A may be Ni, Co, Mn, or a combination thereof; $B^1$ may be Al, Ni, Co, Mn, Cr, Fe, Mg, Sr, V, Ga, Si, W, Mo, Cu, Zn, Ti, boron (B), a rare earth element, or a combination thereof; $D^1$ may be O, F, S, P, or a combination thereof; E may be Co, Mn, or a combination thereof; $F^1$ may be F, S, P, Cl, Br, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof.

For example, the cathode active material may include a lithium transition metal oxide including nickel and another transition metal. In the lithium transition metal oxide including nickel and another transition metal, a content of nickel may be 60 mol% or more, for example, 75 mol% or more, for example, 80 mol% or more, for example, 85 mol% or more, or for example, 90 mol% or more with respect to the total mole number of the transition metal.

For example, the lithium transition metal oxide may be a compound represented by Formula 1 below:

Formula 1        $Li_aNi_xCo_yM_zO_{2-b}A_b$

in Formula 1, $1.0 \leq a \leq 1.2$, $0 \leq b \leq 0.2$, $0.6 \leq x < 1$, $0 \leq y \leq 0.3$, $0 < z \leq 0.3$, $x+y+z = 1$, M is at least one selected from the group consisting of manganese (Mn), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), and boron (B), and A is F, S, Cl, Br, or a combination thereof.

For example, in Formula 1, $0.7 \leq x < 1$, $0 < y \leq 0.3$, and $0 < z \leq 0.3$; $0.8 \leq x < 1$, $0 < y \leq 0.3$, and $0 < z \leq 0.3$; $0.8 \leq x < 1$, $0 < y \leq 0.2$, and $0 < z \leq 0.2$; $0.83 \leq x < 0.97$, $0 < y \leq 0.15$, and $0 < z \leq 0.15$; or $0.85 \leq x \leq 0.95$, $0 < y \leq 0.1$, and $0 < z \leq 0.1$.

For example, the lithium transition metal oxide may be at least one of compounds represented by Formulas 2 and 3 below:

Formula 2        $LiNi_xCo_yMn_zO_2$

in Formula 2, $0.6 \leq x \leq 0.95$, $0 < y \leq 0.2$, and $0 < z \leq 0.1$, or for example, $0.7 \leq x \leq 0.95$, $0 < y \leq 0.3$, and $0 < z \leq 0.3$.

Formula 3        $LiNi_xCo_yAl_zO_2$

in Formula 3, $0.6 \leq x \leq 0.95$, $0 < y \leq 0.2$, and $0 < z \leq 0.1$. For example, $0.7 \leq x \leq 0.95$, $0 < y \leq 0.3$, and $0 < z \leq 0.3$. For example, $0.8 \leq x \leq 0.95$, $0 < y \leq 0.3$, and $0 < z \leq 0.3$. For example, $0.82 \leq x \leq 0.95$, $0 < y \leq 0.15$, and $0 < z \leq 0.15$. For example, $0.85 \leq x \leq 0.95$, $0 < y \leq 0.1$, and $0 < z \leq 0.1$.

For example, the lithium transition metal oxide may be $LiNi_{0.6}Co_{0.2}Mn_{0.2}O_2$, $LiNi_{0.88}Co_{0.08}Mn_{0.04}O_2$, $LiNi_{0.8}Co_{0.15}Mn_{0.05}O_2$, $LiNi_{0.8}Co_{0.1}Mn_{0.1}O_2$, $LiNi_{0.88}Co_{0.1}Mn_{0.02}O_2$, $LiNi_{0.8}Co_{0.15}Al_{0.05}O_2$, $LiNi_{0.8}Co_{0.1}Mn_{0.2}O_2$, or $LiNi_{0.88}Co_{0.1}Al_{0.02}O_2$.

For example, as the cathode active material, a material having a coating layer on a surface of the lithium transition metal oxide may be used, or the lithium transition metal oxide and a lithium transition metal oxide having a coating layer may be mixed and used.

For example, the coating layer may include a coating element compound of an oxide or hydroxide of a coating element, an oxyhydroxide of the coating element, an oxycarbonate of the coating element, or a hydroxycarbonate of the coating element.

For example, a compound constituting the coating layer may be amorphous or crystalline. The coating element included in the coating layer may include Mg, Al, Co, K, Na, Ca, Si, Ti, V, Sn, Ge, Ga, B, As, Zr, or a mixture thereof. In a process of forming the coating layer, any coating method may be used as long as coating may be performed with the coating elements through a method (for example, a spray coating method or a dipping method) that does not adversely affect physical properties of a cathode active material. Since the coating method is known well to those who work in the related field, a detailed description thereof will be omitted.

The conductive material may include carbon black, graphite fine particles, or the like, but one or more embodiments are not limited thereto. Any material usable as a conductive material in the art may be used.

The binder may include a vinylidene fluoride/hexafluoropropylene copolymer, polyvinylidene fluoride (PVDF), polyacrylonitrile, polymethyl methacrylate, polytetrafluoroethylene, and a mixture thereof, or a styrene butadiene rubber-based polymer, but one or embodiments are not limited thereto. Any material usable as a binder in the art may be used.

[Separator]

According to an embodiment, the anode-free lithium metal battery may further include a separator (not shown).

As a specific example of the separator, polyethylene, polypropylene, PVDF, or a multilayer film thereof having two or more layers may be used, and a mixed multilayer film such as a polyethylene/polypropylene double-layered separator, a polyethylene/polypropylene/polyethylene triple-layered separator, or a polypropylene/polyethylene/polypropylene triple-layered separator may be used.

[Method of manufacturing anode-free lithium metal battery]

According to an embodiment, for an anode-free lithium metal battery 100, an anode current collector 110 may be used. Next, a cathode 150 including a cathode active material layer 130 and a cathode current collector 140 may be prepared. Afterward, the anode current collector 110 and the cathode 150 may be sequentially stacked to prepare an electrode structure. In this case, the cathode 150 may be disposed on the anode current collector 110 such that the cathode active material layer 130 is disposed adjacent to the anode current collector 110. Thereafter, the electrolyte 120 described above may be injected into the electrode structure to manufacture the anode-free lithium metal battery. In this case, the electrolyte 120 may be injected between the anode current collector 110 and the cathode 150. Accordingly, the anode current collector 110, the electrolyte 120, the cathode active material layer 130, and the cathode current collector 140 may be sequentially stacked.

According to another embodiment, a separator (not shown) may be prepared. The separator may be stacked between the anode current collector 110 and the cathode 150.

The cathode 150 may be prepared according to the following method.

According to an embodiment, a cathode active material composition may be prepared by mixing a cathode active material, a conductive agent, a binder, and a solvent. The cathode current collector 140 may be coated with the cathode active material composition to prepare the cathode 150.

According to another embodiment, the cathode active material composition may be cast on a separate support, and then a film peeled off of the support may be stacked on the cathode current collector 140 to prepare the cathode 150. For example, the cathode 150 is not limited to the forms listed above and may have forms other than the above forms.

For description of the cathode active material, the conductive agent, and the binder included in the cathode active material composition, reference may be made to the above descriptions. The solvent included in the cathode active material composition may include N-methylpyrrolidone, acetone, or water, but one or more embodiments are not limited thereto. Any solvent usable in the art may be used.

Contents of the cathode active material, the conductive agent, the binder, and the solvent included in the cathode active material composition are at levels typically used in lithium metal batteries. At least one of the conductive agent, the binder, and the solvent may be omitted according to the use and configuration of a lithium metal battery.

According to an embodiment, a battery case including an anode-free lithium metal battery may have a cylindrical shape, a prismatic shape, a thin film shape, or the like. For example, the lithium metal battery may be a large-sized thin-film battery. The lithium metal battery may be a lithium ion battery.

According to an embodiment, examples of the anode-free lithium metal battery include a lithium-air battery, a lithium-sulfur battery, and the like.

According to an embodiment, the anode-free lithium metal battery may have excellent lifespan characteristics and high-rate characteristics and thus may be used in electric vehicles (EVs). For example, the anode-free lithium metal battery may be used in hybrid vehicles such as plug-in hybrid electric vehicles (PHEVs). In addition, the anode-free lithium metal battery may be used in fields in which large amounts of power are required to be stored. For example, the anode-free lithium metal battery may be used in electric bicycles, power tools, or the like.

When a plurality of anode-free lithium metal batteries 100 according to an embodiment of the present disclosure are stacked, a gel-type electrolyte may be disposed between a cathode and a liquid-impermeable ion-conductive composite membrane. The gel-type electrolyte may include, for example, a vinylidene difluoride-hexafluoropropylene (VDF-HFP) copolymer, a lithium salt, and an organic solvent.

Hereinafter, the present disclosure will be described in detail with reference to the following examples, but the following examples are not intended to limit the scope of the present disclosure.

Example 1: Anode-free lithium metal battery

Copper foil which was an anode current collector was prepared. Separately, a cathode was prepared according to the following method.

$LiNi_xCo_yAl_{1-x-y}O_2$, a conductive agent (Super-P manufactured by Timcal Ltd.), PVDF, and N-methylpyrrolidone were mixed to obtain a composition for forming a cathode active material layer. In the composition for forming a cathode active material layer, a mixing weight ratio of $LiNi_xCo_yAl_{1-x-y}O_2$, the conductive agent, and PVDF was 97:1.5:1.5.

The composition for forming a cathode active material was applied onto aluminum foil (thickness: about 15 $\mu$m) and dried at a temperature of 25 °C, and then the dried result was dried in a vacuum at a temperature of about 110 °C to prepare the cathode.

The cathode was disposed on the anode current collector such that a cathode active material layer of the cathode was adjacent to the anode current collector, and the cathode, the anode current collector, and the cathode active material layer were coupled to each other to prepare an electrode structure.

Afterwards, an electrolyte was injected between the anode current collector and the cathode to manufacture an anode-free lithium battery.

The electrolyte was prepared by mixing fluoroethylene carbonate and diethyl carbonate with lithium hexafluorophosphate ($LiPF_6$) and $Ca(TFSI)_2$ in a volume ratio of 1:2. Concentrations of $LiPF_6$ and $Ca(TFSI)_2$ in the electrolyte were 1.2 M and 0.1 M, respectively.

Example 2: Anode-free lithium metal battery

An anode-free lithium metal battery was manufactured in the same manner as in Example 1, except that $Sr(TFSI)_2$ was used as a metal salt instead of $Ca(TFSI)_2$.

Example 3: Anode-free lithium metal battery

An anode-free lithium metal battery was manufactured in the same manner as in Example 1, except that $Ba(TFSI)_2$ was used as a metal salt instead of $Ca(TFSI)_2$.

Comparative Example 1: Anode-free lithium metal battery

An anode-free lithium metal battery was manufactured in the same manner as in Example 1, except that $Mg(TFSI)_2$ was used as a metal salt instead of $Ca(TFSI)_2$.

Comparative Example 2: Anode-free lithium metal battery

An anode-free lithium metal battery was manufactured in the same manner as in Example 1, except that $LiNO_3$ was used as a metal salt instead of $Ca(TFSI)_2$.

Comparative Example 3: Electrolyte including dissimilar metal salt additive having standard reduction potential higher than -1.68 V (vs. standard hydrogen reduction electrode)

An anode-free lithium metal battery was manufactured in the same manner as in Example 1, except that $Sn(TFSI)_2$ was used as a metal salt instead of $Ca(TFSI)_2$.

For the cathode, $LiNi_xCo_yAl_{1-x-y}O_2$, a conductive agent (Super-Pn manufactured by Timcal Ltd.), PVDF, and N-methylpyrrolidone were mixed to obtain a cathode composition. A mixing weight ratio of $LiNi_xCo_yAl_{1-x-y}O_2$, the conductive agent, and PVDF in the cathode composition was 97:1.5:1.5. Next, the cathode composition was applied onto aluminum foil (thickness: about 15 $\mu$m) and dried at a temperature of 25 °C, and then the dried result was dried in a vacuum at a temperature of about 110 °C to prepare the cathode.

Evaluation Example 1: Initial capacity comparison

In order to compare the resistance characteristics of the anode-free lithium metal batteries manufactured according to Examples 1 to 3 and Comparative Examples 1 to 3, the discharge capacities of a 1st cycle were compared.

Each lithium metal battery was charged at a constant current rate of 0.1 C at a temperature of 45 °C until a voltage reached 4.30 V (vs. Li), and then, in constant voltage mode, while 4.30 V was maintained, the charging was cut-off at a current rate of 0.05 C. Subsequently, each lithium metal battery was discharged at a constant current rate of 0.1 C until the voltage reached 3.6 V (vs. Li) during discharging (formation operation, 1st cycle). At a next cycle, each lithium metal battery was charged at a constant current rate of 0.2 C until a voltage reached 4.30 V (vs. Li), and then, in a constant voltage mode, while 4.30 V was maintained, the charging was cut-off at a current rate of 0.05 C. Subsequently, each lithium metal battery was discharged at a constant current rate of 0.2 C until the voltage reached 3.6 V (vs. Li) during discharging (formation operation, 2nd cycle). Such a charging and discharging process was performed to complete a formation process.

After the formation process, each lithium metal battery was charged at a constant current rate of 0.33 C until a voltage reached 4.30 V (vs. Li), and then, in a constant voltage mode, while 4.30 V was maintained, the charging was cut-

off at a current rate of 0.05 C. Next, each lithium metal battery was discharged at a constant current rate of 1.0 C until the voltage reached 3.6 V (vs. Li) during discharging, and the resistance characteristics of the respective Examples and Comparative Examples were compared by comparing discharge capacities at a rate of 1.0 C rate. Results thereof are shown in Table 1 below.

[Table 1]

| Classification | Discharge capacity (mAh) |
|---|---|
| Example 1 | 10.3890 |
| Example 2 | 10.5307 |
| Example 3 | 10.4405 |
| Comparative Example 1 | 10.3645 |
| Comparative Example 2 | 10.3441 |
| Comparative Example 3 | 10.2426 |

Referring to Table 1, it was seen that the discharge capacity of Examples 1 to 3 increased as compared to Comparative Examples 1 to 3.

Evaluation Example 2: Charge/discharge Characteristics

In order to compare the lifespan characteristics of the anode-free lithium metal batteries manufactured according to Examples 1 to 3 and Comparative Examples 1 to 3, the discharge capacities of a 1st cycle were compared.

Each of the anode-free lithium metal batteries according to Examples 1 to 3 and Comparative Examples 1 to 3 was charged at a constant current rate of 0.1 C at a temperature of 45 °C until a voltage reached 4.30 V (vs. Li), and then then, in a constant voltage mode, while 4.30 V was maintained, the charging was cut off at a current rate of 0.05 C. Subsequently, each of the anode-free lithium metal batteries was discharged at a constant current rate of 0.1 C until the voltage reached 3.6 V (vs. Li) during discharging (formation operation, 1st cycle). At a next cycle, each of the anode-free lithium metal batteries was charged at a constant current rate of 0.2 C until a voltage reached 4.30 V (vs. Li), and then, in a constant voltage mode, while 4.30 V was maintained, the charging was cut-off at a current rate of 0.05 C. Subsequently, each of the anode-free lithium metal batteries was discharged at a constant current rate of 0.2 C until the voltage reached 3.6 V (vs. Li) during discharging (formation operation, 2nd cycle). Such a charging and discharging process was performed to complete a formation process.

After the formation process, each of the anode-free lithium metal batteries was charged at a constant current rate of 0.33 C until a voltage reached 4.30 V (vs. Li), and then, in a constant voltage mode, while 4.30 V was maintained, the charging was cut-off at a current rate of 0.05 C. Subsequently, each of the anode-free lithium metal batteries was discharged at a constant current rate of 1.0 C until the voltage reached 3.6 V (vs. Li) during discharging, and continuous charging/discharging was performed under the same conditions to observe a capacity change and compare lifespan characteristics.

The anode-free lithium metal batteries were rested for 10 minutes after every charging/discharging cycle. Results thereof are listed in Table 2 below. Here, a capacity retention rate at a 50th cycle is defined by Equation 2 below.

Capacity retention rate (%) = [discharge capacity of 50th/discharge capacity of 1st cycle $\times$ 100]     Equation 2

[Table 2]

| Composition | Capacity retention rate (%) |
|---|---|
| Example 1 | 95.0 |
| Example 2 | 94.7 |
| Example 3 | 94.4 |
| Comparative Example 1 | 78.7 |
| Comparative Example 2 | 80.0 |

(continued)

| Composition | Capacity retention rate (%) |
|---|---|
| Comparative Example 3 | 27.3 |

Referring to Table 2 above, it was seen that the anode-free lithium metal batteries according to Examples 1 to 3 had the improved capacity retention rate as compared to the anode-free lithium metal batteries according to Comparative Examples 1 to 3.

Evaluation Example 3: Evaluation of lithium alloy content in metal layer

After the anode-free lithium metal batteries manufactured according to Examples 1 to 3 were charged in a first formation operation, an element distribution of a cross section of a lithium metal electrodeposited an anode current collector was analyzed through scanning electron microscope energy dispersive spectroscopy (EDS) analysis.

Referring to FIG. 3, when the lithium metal is divided into three equal parts in a thickness direction to sequentially define a first region, a second region, and a third region from a region that is near to the anode current collector to a region that is far from the anode current collector, by analyzing an element distribution ratio for the first region, a ratio of a dissimilar metal to a carbon atom is shown as follows. The dissimilar metal was derived from a metal cation included in the electrolyte.

[Table 3]

| Classification | Cross-sectional EDS dissimilar metal/carbon element ratio (wt/wt) |
|---|---|
| Example 1 (Ca) | Ca/C=0.775 |
| Example 2 (Sr) | Sr/C=1.78 |
| Example 3 (Ba) | Ba/C=2.86 |

While one or more embodiments have been described with reference to the drawings and Examples, the description merely illustrates, and it will be understood by those of ordinary skill in the art that various modifications and other equivalent embodiments are possible therefrom. Therefore, the protection scope of the disclosure should be defined by the appended claims.

**List of Reference Numerals for Major Elements**

| | | | |
|---|---|---|---|
| 100: | anode-free lithium metal battery | | |
| 110: | anode current collector | 120: | electrolyte |
| 130: | cathode active material layer | 140: | cathode current collector |
| 150: | cathode | 125: | metal layer |

**Claims**

1.  An electrolyte for an anode-free lithium metal battery, the electrolyte comprising:

    a lithium salt;
    a metal salt; and
    an organic solvent,
    wherein the metal salt is an ionic bond compound of a metal cation and an anion, and
    the metal cation has a standard reduction potential that is lower than -1.68 V with respect to a standard hydrogen reduction electrode, is capable of forming an alloy with lithium (Li), and belongs to Period 4 or higher of the Periodic Table of Elements.

2.  The electrolyte of claim 1, wherein the metal cation comprises a monovalent cation, a divalent cation, a trivalent cation, a tetravalent cation, or any combination thereof.

3. The electrolyte of claim 1, wherein the metal cation comprises $Ca^{2+}$, $Sr^{2+}$, $Ba^{2+}$, or any combination thereof.

4. The electrolyte of claim 1, wherein the anion comprises an imide-based anion, an amide-based anion, a triazole-based anion, an imidazole-based anion, a phosphate-based anion, a borate-based anion, a nitrate-based anion, or any combination thereof.

5. The electrolyte of claim 1, wherein the anion comprises bis(trifluoromethanesulfonyl)amide ($TFSI^-$), bis((perfluoroethyl)sulfonyl)amide ($BETI^-$), fluorosulfonyl-(perfluoroethyl)sulfonylamide ($FPFSI^-$), tetrafluoro-perfluoroethoxyethanesulfonate, bis(fluorosulfonyl)amide ($FSI^-$), trifluoromethanesulfonate ($OTf^-$), fluorosulfonyl-trifluorosulfonylamide ($FTFSI^-$), perfluorobutylsulfonate, methanesulfonate, perfluorohexylsulfonate, tris(pentafluoroethyl)trifluorophosphate ($FAP^-$), cyclo-hexafluoropropane-bis(sulfonyl)imide ($HPSI^-$), sulfate ($SO_4^-$), cyclo-difluoromethanebis(sulfonyl)imide ($DMSI^-$), bis(fluoromalonato)borate ($BFMB^-$), hexafluorophosphate ($PF_6^-$), tetrafluoroborate ($BF_4^-$), dicyanotriazolate ($DCTA^-$), tetracyanoborate ($Bison^-$), dicyano-trifluoromethyl-imidazole ($TDI^-$), difluoro-dioxalatophosphate ($DFOP^-$), dicyano-pentafluoroethyl-imidazole ($PDI^-$), difluoro-oxalate-borate ($DFOB^-$), tetra(phosphorodifluoridate)borate, bis(oxalate)borate ($BOB^-$), nitrate ($NO_3^-$), difluorophosphate, tetrafluoro-oxalatophosphate, trifluorotrisperfluoroethylphosphate, or any combination thereof.

6. The electrolyte of claim 1, wherein a concentration of the metal salt is in a range of 0.02 M to 5.0 M.

7. The electrolyte of claim 1, wherein the organic solvent comprises at least one selected from a glyme-based solvent, a dioxolane-based solvent, a fluorinated ether-based solvent, a sulfone-based solvent, and a carbonate-based solvent.

8. The electrolyte of claim 7, wherein the glyme-based solvent comprises at least one selected from the group consisting of ethylene glycol dimethyl ether (1,2-dimethoxyethane), ethylene glycol diethyl ether (1,2-diethoxyethane), propylene glycol dimethyl ether, propylene glycol diethyl ether, butylene glycol dimethyl ether, butylene glycol diethyl ether, diethylene glycol dimethyl ether, triethylene glycol dimethyl ether, tetraethylene glycol dimethyl ether, diethylene glycol diethyl ether, triethylene glycol diethyl ether, tetraethylene glycol diethyl ether, dipropylene glycol dimethyl ether, tripropylene glycol dimethyl ether, tetrapropylene glycol dimethyl ether, dipropylene glycol diethyl ether, tripropylene glycol diethyl ether, tetrapropylene glycol diethyl ether, dibutylene glycol dimethyl ether, tributylene glycol dimethyl ether, tetrabutylene glycol dimethyl ether, dibutylene glycol diethyl ether, tributylene glycol diethyl ether, and tetrabutylene glycol diethyl ether,

the fluorinated ether-based solvent comprises at least one selected from 1,1,2,2-tetrafluoroethyl 2,2,3,3-tetrafluoropropyl ether, and 2,2,3,3,4,4,5,5-octafluoropentyl 1,1,2,2-tetrafluoroethyl ether,
the dioxolane-based solvent comprises at least one selected from 1,3-dioxolane, 4,5-dimethyl-dioxolane, 4,5-diethyl-dioxolane, 4-methyl-1,3-dioxolane, 4-ethyl-1,3-dioxolane, 2-methyl-1,3-dioxolane, 2-vinyl-1,3-dioxolane, 2,2-dimethyl-1,3-dioxolane, 2-methoxy-1,3-dioxolane, and 2-ethyl-2-methyl-1,3-dioxolane,
the sulfone-based solvent comprises at least one selected from dimethyl sulfone, diethyl sulfone, and ethyl methyl sulfone, and
the carbonate-based solvent comprises at least one selected from ethylene carbonate, propylene carbonate, dimethyl carbonate, diethyl carbonate, butylene carbonate, ethyl methyl carbonate, fluoroethylene carbonate, methyl propyl carbonate, ethyl propyl carbonate, methyl isopropyl carbonate, dipropyl carbonate, and dibutyl carbonate.

9. The electrolyte of claim 7, wherein the organic solvent comprises a fluorinated

ether-based compound, and
a content of the fluorinated ether-based compound is 50 vol% or less with respect to a total content of the organic solvent.

10. The electrolyte of claim 1, wherein the lithium salt comprises LiSCN, $LiN(CN)_2$, $Li(CF_3SO_2)_3C$, $Li(FSO_2)_2N$(LiFSI), $LiC_4F_9SO_3$, $LiN(SO_2CF_2CF_3)_2$, $LiPF_3(C_2F_5)_3$, LiCl, LiF, LiBr, LiI, $LiB(C_2O_4)_2$, $LiPF_6$, $LiPF_5(CF_3)$, $LiPF_5(C_2F_5)$, $LiPF_5(C_3F_7)$, $LiPF_4(CF_3)_2$, $LiPF_4(CF_3)(C_2F_5)$, $LiPF_3(CF_3)_3$, $LiPF_3(CF_2CF_3)_3$, $LiPF_4(C_2O_4)_2$, $LiBF_4$, $LiBF_3(C_2F_5)$, lithium bis(oxalato)borate (LiBOB), lithium oxalyldifluoroborate (LiODFB), lithium difluoro(oxalato)borate (LiDFOB), lithium bis(trifluoro methanesulfonyl)imide (LiTFSI), $LiN(SO_2CF_3)_2$, lithium bis(fluorosulfonyl)imide, LiFSI, $LiN(SO_2F)_2$, $LiN(SO_2C_2F_5)_2$, $LiCF_3SO_3$, $LiAsF_6$, $LiSbF_6$, $LiClO_4$, or any combination thereof.

11. The electrolyte of claim 1, wherein the electrolyte has a liquid or gel form.

12. An anode-free lithium metal battery comprising:

   a cathode current collector;
   a cathode containing a cathode active material layer;
   an anode current collector; and
   the electrolyte of claim 1.

13. The anode-free lithium metal battery of claim 12, further comprising a metal layer disposed between the anode current collector and the electrolyte, wherein the metal layer comprises a lithium alloy.

14. The anode-free lithium metal battery of claim 13, wherein the lithium alloy is a reaction product of a lithium ion and a metal cation which are included in the electrolyte.

15. The anode-free lithium metal battery of claim 13, wherein when the metal layer is divided into three equal parts in a thickness direction to sequentially define first to third regions from a region that is near to the anode current collector to a region that is far from the anode current collector, a weight ratio of a metal element derived from the metal cation to a carbon element in the first region is in a range of 0.75 to 5.5.

**FIG. 1**

# FIG. 2

# FIG. 3

## INTERNATIONAL SEARCH REPORT

| International application No. |
|---|
| **PCT/KR2024/003787** |

### A. CLASSIFICATION OF SUBJECT MATTER

**H01M 10/0567**(2010.01)i; **H01M 10/052**(2010.01)i; **H01M 10/0569**(2010.01)i; **H01M 10/058**(2010.01)i; **H01M 4/134**(2010.01)i; **H01M 10/52**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 10/0567(2010.01); B82Y 30/00(2011.01); B82Y 40/00(2011.01); H01M 10/052(2010.01); H01M 10/056(2010.01); H01M 10/0565(2010.01); H01M 10/0566(2010.01); H01M 4/1395(2010.01); H01M 4/505(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬금속전지(lithium metal battery), 무음극(anode-less), 전해질 (electrolyte), 리튬 합금(lithium alloy), 금속염(metal salt)

### C. DOCUMENTS CONSIDERED TO BE RELEVANT

| Category* | Citation of document, with indication, where appropriate, of the relevant passages | Relevant to claim No. |
|---|---|---|
| X | KR 10-2017-0009653 A (SAMSUNG ELECTRONICS CO., LTD. et al.) 25 January 2017 (2017-01-25) See claim 7; and paragraphs [0074], [0076], [0078], [0104], [0120]-[0130] and [0158]. | 1-12 |
| Y | | 13-15 |
| Y | KR 10-2022-0139062 A (UNIST(ULSAN NATIONAL INSTITUTE OF SCIENCE AND TECHNOLOGY)) 14 October 2022 (2022-10-14) See claims 1, 2 and 9; and paragraph [0011]. | 13-15 |
| A | KR 10-2023-0032500 A (HYUNDAI MOTOR COMPANY et al.) 07 March 2023 (2023-03-07) See entire document. | 1-15 |
| A | KR 10-2019-0140449 A (THE BOARD OF REGENTS OF THE UNIVERSITY OF TEXAS SYSTEM) 19 December 2019 (2019-12-19) See entire document. | 1-15 |

☑ Further documents are listed in the continuation of Box C.     ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **28 June 2024** | **01 July 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 693 565 A1**

## INTERNATIONAL SEARCH REPORT

<table>
<tr><td colspan="2"></td><td>International application No.<br><br>**PCT/KR2024/003787**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | US 2021-0020986 A1 (LIONANO SE INC.) 21 January 2021 (2021-01-21)<br>See entire document. | 1-15 |

**INTERNATIONAL SEARCH REPORT**
Information on patent family members

International application No.

**PCT/KR2024/003787**

| Patent document cited in search report | | | Publication date (day/month/year) | Patent family member(s) | | | Publication date (day/month/year) |
|---|---|---|---|---|---|---|---|
| KR | 10-2017-0009653 | A | 25 January 2017 | US | 10763545 | B2 | 01 September 2020 |
| | | | | US | 11424481 | B2 | 23 August 2022 |
| | | | | US | 2017-0018800 | A1 | 19 January 2017 |
| | | | | US | 2020-0335821 | A1 | 22 October 2020 |
| KR | 10-2022-0139062 | A | 14 October 2022 | KR | 10-2578412 | B1 | 15 September 2023 |
| KR | 10-2023-0032500 | A | 07 March 2023 | | None | | |
| KR | 10-2019-0140449 | A | 19 December 2019 | CN | 110662608 | A | 07 January 2020 |
| | | | | CN | 110662608 | B | 06 June 2023 |
| | | | | EP | 3615228 | A1 | 04 March 2020 |
| | | | | EP | 3615228 | A4 | 17 March 2021 |
| | | | | JP | 2020-520533 | A | 09 July 2020 |
| | | | | JP | 7158744 | B2 | 24 October 2022 |
| | | | | KR | 10-2637498 | B1 | 19 February 2024 |
| | | | | US | 11380886 | B2 | 05 July 2022 |
| | | | | US | 2020-0365877 | A1 | 19 November 2020 |
| | | | | WO | 2018-201125 | A1 | 01 November 2018 |
| US | 2021-0020986 | A1 | 21 January 2021 | US | 11450884 | B2 | 20 September 2022 |
| | | | | US | 2023-096009 | A1 | 30 March 2023 |

Form PCT/ISA/210 (patent family annex) (July 2022)